# FASCICULE DE BREVET EUROPEEN

(11) **EP 2 494 861 B1**
(45) Date de publication et mention de la délivrance du brevet: **25.12.2013**
(21) Numéro de dépôt: 12157572.4
(22) Date de dépôt: 29.02.2012
(51) Int. Cl.: A01B 73/04, A01C 7/20

(54) **Châssis de semoir pouvant occuper une position de transport et une position de travail, susceptible de prendre une configuration rigide ou flottante**
Gestell einer Sämaschine, das eine Transport- und eine Arbeitsposition einnehmen kann, wobei es eine starre oder flexible Konfiguration zulässt
Seeder frame that can take on a transport position and a working position, capable of having a rigid or floating configuration

(30) Priorité: 03.03.2011 FR 1151723
(43) Date de publication de la demande: 05.09.2012
(73) Titulaire: Ribouleau Monosem, 79240 Largeasse (FR)
(72) Inventeur: Bergere, Caroline, 79300 Bressuire (FR)
(74) Mandataire: Descamps, Cécile

(56) Documents cités:
- DE-A1- 3 827 624
- US-A- 4 453 601
- US-A- 5 921 325

## Description

### 1. Domaine de l'invention

L'invention concerne le domaine des châssis de semoirs, notamment des châssis de semoirs monograines, destinés à être solidarisés à un tracteur pour être portés de manière à distribuer dans les champs des graines, par exemple des graines de maïs, blé, colza ou autres.

Les châssis de semoirs peuvent, pour le transport sur route, être mis en position de transport, repliée, et ne dépassent alors pas 3 m de largeur, selon les normes européennes en vigueur de circulation sur route. Dans les champs, les châssis semoirs sont mis en position de travail, d'une largeur d'au moins 3 m de manière à semer simultanément la plus grande largeur possible.

Les châssis de semoirs concernés par l'invention comprennent au moins une partie centrale fixe et au moins une partie latérale montée articulée sur ladite partie centrale entre une position de travail, alignée avec la partie centrale et une position de transport, escamotée, dans laquelle la ou les partie(s) latérale(s) est(sont) placée(s) au moins en partie au-dessus de la partie centrale. Le châssis peut comporter une partie centrale et deux parties latérales disposées de part et d'autre de la partie centrale en position de travail.

Actuellement, les châssis de semoir sont proposés en deux versions :
- une version selon laquelle, dans la position de travail, le châssis est dans une configuration rigide (« châssis de type rigide») ;
- une version selon laquelle, dans la position de travail, le châssis est dans une configuration flottante (« châssis de type flottant »).

Dans la configuration rigide, la partie centrale et la partie latérale sont maintenues alignées entre elles, la liaison étant rigide entre elles. Dans ce cas, seules deux roues d'appui au sol sont nécessaires pour porter le châssis et, le cas échéant, les accessoires. Au moins un accouplement assure le transfert des mouvements de rotation entre la partie centrale et la ou les partie(s) latérale(s). La rigidification peut être assurée par tout moyen, automatique ou non, tel que des axes, des crochets, des vérins, notamment hydrauliques, ou autres.

Dans la configuration flottante, la partie centrale et la partie latérale sont mobiles entre elles, étant de préférence sensiblement parallèles entre elles, reliées par exemple par des parallélogrammes pour assurer ce parallélisme. Une telle configuration peut permettre pour le châssis de mieux épouser les accidents de terrain. Chaque partie, dans cette configuration, doit être portée par des roues, à savoir deux roues pour la partie centrale, et au moins une roue pour la ou chaque partie latérale.

### 2. Solutions de l'art antérieur

Les châssis de semoirs connus sont fabriqués spécifiquement pour être, en position de travail, dans une configuration rigide ou dans une configuration flottante.

Un tel châssis de semoir est connu de DE 38 27 624 U.

Il n'est pas possible actuellement de passer relativement simplement, notamment pour le concessionnaire, d'un châssis de type rigide à un châssis de type flottant de manière simple.

Il n'existe pas non plus, pour le fabricant de châssis, de lignes de production communes aux châssis de type rigide et aux châssis de type flottant.

### 3. Objectifs de l'invention

L'invention a donc notamment pour objectif de pallier tout ou partie de ces inconvénients de l'art antérieur.

Plus précisément, l'invention a pour objectif de fournir un châssis semoir qui permette d'utiliser sensiblement les mêmes lignes de production pour la fabrication de châssis de type rigide ou de châssis de type flottant.

L'invention a encore pour objectif de fournir un châssis de semoir de type rigide qui puisse être relativement simplement transformé en châssis de semoir de type flottant et vice versa.

### 4. Exposé de l'invention

L'invention y parvient grâce à un châssis de semoir, comprenant :
- une partie centrale fixe,
- au moins une partie latérale montée articulée sur la partie centrale entre une position de travail, alignée avec la partie centrale et une position de transport, escamotée, dans laquelle la partie latérale est placée au moins en partie au-dessus de la partie centrale, la partie latérale comprenant une poutre portée par un bras,
- au moins un vérin dont une première extrémité est solidaire de la partie centrale et une deuxième extrémité est solidaire de la partie latérale au niveau du bras,
la partie latérale comprenant :
- un premier élément destiné à coopérer avec une came pour contraindre la partie latérale à occuper la position de travail et
- un deuxième élément formant organe de blocage au moins partiel de la partie latérale dans la position de travail.

Selon l'invention, la partie latérale comprend au moins un flasque monté sur le bras et présentant une lumière, notamment oblongue curviligne, le vérin étant solidaire par sa deuxième extrémité d'un premier axe monté coulissant dans la lumière et les premier et deuxième éléments sont portés par une pièce de verrouillage montée de façon amovible sur le flasque.

Grâce à l'invention, on dispose d'un châssis qui permet de passer relativement facilement d'une configuration rigide à une configuration flottante, les fonctions de rigidification étant portées par la pièce de verrouillage amovible. Cela permet pour le fabricant de livrer au concessionnaire un unique type de châssis que celui-ci peut transformer, à son gré, en version rigide ou flottante, avec des changements minimes incluant l' aj out ou le retrait de la pièce de verrouillage portant les premier et deuxième éléments.

En effet, la pièce de verrouillage portant les premier et deuxième éléments remplit les fonctions de mise en alignement des parties centrale et latérale et de verrouillage en position d'alignement de ces parties centrale et latérale, en coopération avec des parties correspondantes du reste du châssis.

Avantageusement, le flasque peut présenter des moyens de positionnement de ladite pièce de verrouillage. Dans ce cas, les moyens de positionnement comprennent préférentiellement un premier orifice de réception d'un deuxième axe autour duquel la pièce de verrouillage peut pivoter. Les moyens de positionnement peuvent comporter un deuxième orifice de réception de moyens de fixation d'une plaque de retenue du deuxième axe.

Selon une caractéristique avantageuse, la pièce de verrouillage peut comporter une ouverture configurée pour permettre le passage du premier axe. Cela lui permet, dans ce cas, d'être solidaire du vérin, notamment dans sa course le long de la lumière oblongue. Dans un mode de réalisation, la course effectuée par l'axe du vérin lors du passage de la position de transport à la position de travail se termine notamment par le déplacement du premier axe dans la lumière oblongue faisant pivoter la pièce de verrouillage, ce qui met en oeuvre le premier élément puis le deuxième élément de manière à aligner puis verrouiller les parties centrale et latérale en position de travail.

Selon un mode de réalisation préférentiel, le premier élément comporte un galet. Dans ce cas, le galet peut rouler le long de la came pour guider en alignement les poutres des parties centrale et latérale.

Dans un mode de réalisation, le deuxième élément comporte un galet. Ce galet peut se positionner sur un plot solidaire de la partie latérale, de manière à effectuer notamment le verrouillage vers le haut de cette partie latérale, en position de travail.

Avantageusement, le châssis peut comporter un indicateur d'alignement entre la partie centrale et la partie latérale. Dans ce cas, l'indicateur d'alignement est par exemple solidaire du premier axe. Ainsi, lorsque le premier axe est à une extrémité de la lumière oblongue en fin de course du vérin, l'indicateur marque un alignement correct des parties centrale et latérale.

Le châssis peut comporter une butée réglable et amovible agencée pour assurer l'alignement de la partie centrale et de la partie latérale dans la position de travail. Cette butée peut notamment jouer le rôle d'empêcher la partie latérale de descendre sous la partie centrale, le deuxième élément empêchant la partie latérale de monter au-dessus de la partie centrale.

En l'absence de la pièce de verrouillage sur ledit flasque, le châssis peut prendre une configuration flottante, la partie latérale ayant alors dans la position de travail une possibilité de débattement relativement à la partie centrale, le châssis comprenant une butée de débattement limitant la course de débattement de la partie latérale relativement à la partie centrale en position de travail. Ainsi, malgré la souplesse autorisée dans la liaison entre partie centrale et partie latérale, en position de travail, il existe une limite à cette souplesse.

Il est à noter que l'alignement des parties centrale et latérale doit être entendu comme l'alignement de certaines poutres des parties centrale et latérale, notamment d'une poutre de chacune des parties centrale et latérale(s).

L'invention a encore pour objet, en combinaison avec ce qui précède, un châssis de semoir tel que défini plus haut, dépourvu de la pièce de verrouillage, et, le cas échéant de la butée de réglage et/ou de l'indicateur d'alignement, de manière à être en configuration flottante.

L'invention permet ainsi, à partir du même châssis, essentiellement, de monter celui-ci en configuration flottante ou en configuration rigide.

### 5. Liste des figures

D'autres caractéristiques et avantages de l'invention apparaîtront plus clairement à la lecture de la description suivante d'un mode de réalisation de l'invention, donné à titre d'exemple illustratif et non limitatif et du dessin annexé dans lequel :
- la figure 1 illustre de manière schématique et en perspective un exemple de châssis de semoir conforme à l'invention, utilisé en configuration rigide et en position de travail,
- la figure 2 illustre de manière schématique et en perspective, un châssis de semoir en configuration flottante et en position de travail,
- la figure 3 représente de manière schématique et en perspective le châssis de semoir de la figure 2 en position de transport,
- la figure 4 représente de manière schématique, en perspective et partiellement, une partie du châssis de semoir de la figure 2,
- la figure 5 représente de manière schématique, en perspective et partiellement, une partie du châssis de semoir de la figure 1,
- la figure 6 est une vue de face, schématique et partielle, de la partie du châssis de la figure 5 avec un détail agrandi,
- la figure 7 est une vue de derrière, schématique, en perspective et partielle, de la partie du châssis de la figure 5,
- la figure 8 est une vue en coupe, schématique et isolée de la pièce de verrouillage de la figure 5,
- la figure 9 illustre, en coupe schématique et partielle la pièce de verrouillage selon B-B de la figure 8,
- la figure 10 est une vue de dessus schématique de la pièce de verrouillage de la figure 8,
- la figure 11 est une vue schématique en perspective de la pièce de verrouillage de la figure 8, et
- la figure 12 illustre de manière schématique et partielle le châssis de la figure 3 en position de travail.

### 6. Description détaillée d'un mode de réalisation de l'invention

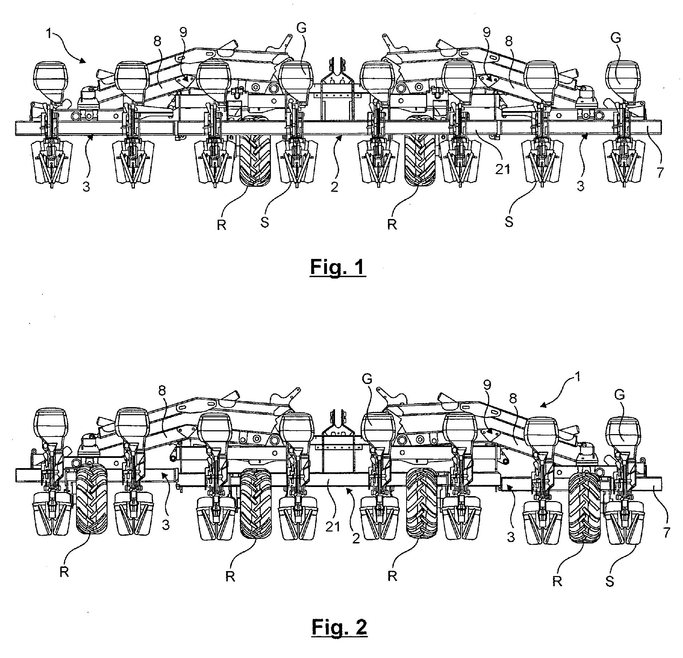

On a représenté sur la figure 1, un châssis de semoir 1 conforme à l'invention, posé sur des roues R, au nombre de deux dans l'exemple illustré, et muni de réserves G de graines multiples, disposées à l'aplomb de chaque élément semeur S. Sur cette figure, le châssis 1 de semoir est dans une configuration dite rigide.

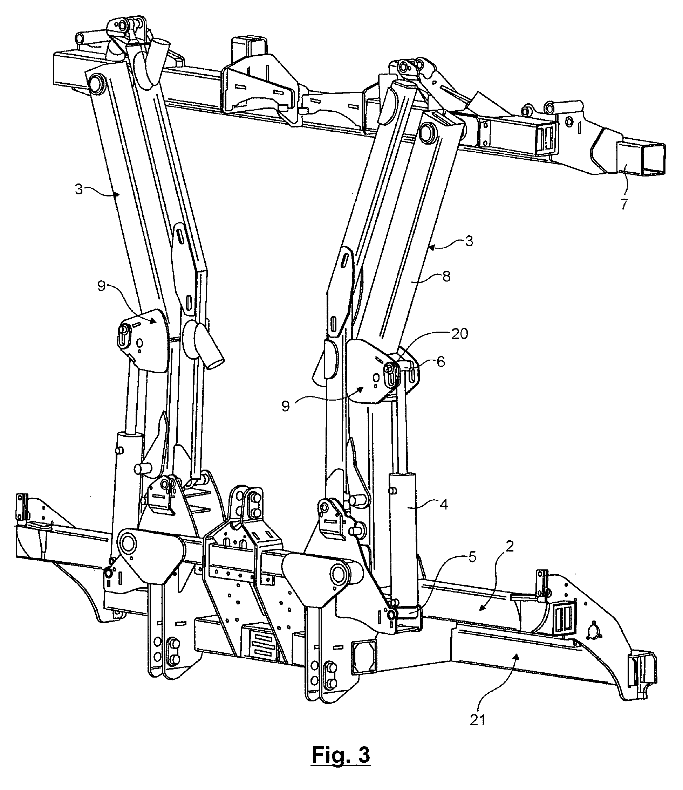

Ce châssis 1 comporte une partie centrale 2 fixe et au moins une partie latérale 3, au nombre de deux dans l'exemple illustré et disposées de part et d'autre de la partie centrale 2. Chacune des parties latérales 3 est montée articulée sur la partie centrale 2 dans une position de travail, visible sur la figure 1, alignée avec la partie centrale, et une position de transport, escamotée, dans laquelle la partie latérale 3 est disposée au moins en partie au-dessus de la partie centrale 2, comme visible par exemple sur la figure 3. Comme le châssis 1 est, sur la figure 1, en configuration rigide, la partie centrale 2 est alignée avec la partie latérale 3, avec une liaison rigide entre elles, dans la position de travail.

Le châssis 1 est par ailleurs représenté dans une configuration flottante sur la figure 2. Dans cette configuration flottante, le châssis 1 comporte une partie centrale 2 et, dans cet exemple, deux parties latérales 3 disposées de part et d'autre de la partie centrale 2. Le châssis 1 est muni de plusieurs roues R, quatre dans cet exemple, à savoir deux pour la partie centrale 2 et une pour chacune des parties latérales 3. Comme pour la configuration rigide, les réserves G de graines sont multiples, disposées à l'aplomb de chaque élément semeur S.

Le châssis 1, qu'il soit dans la configuration rigide illustrée sur la figure 1 ou dans la configuration flottante illustrée sur la figure 2 est porté par un tracteur non représenté. La position de travail illustrée sur les figures 1 et 2 est utilisée pour les semis en champ.

Pour le passage de la position de transport à la position de travail et vice versa, au moins un vérin 4 est prévu sur le châssis conforme à l'invention. Ce vérin 4 présente une première extrémité 5 solidaire de la partie centrale 2 et une deuxième extrémité 6 solidaire de la partie latérale 3.

La partie latérale 3 comporte une poutre 7, dans cet exemple inférieure, portée par un bras 8. Le vérin 4 est monté par sa deuxième extrémité 6 au niveau du bras 8. Dans ce mode de réalisation, le vérin 4 est monté au niveau d'une articulation 9 de ce bras 8. Dans ce mode de réalisation, l'articulation 9 ne permet pas le pivotement à son endroit d'une partie du bras 8 relativement à une autre partie du bras 8, celui-ci restant rigide sur toute sa longueur. Dans ce mode de réalisation également, le bras 8 est coudé au niveau de l'articulation 9, étant formé de deux poutres s'étendant selon des axes différents, reliées au niveau de l'articulation, les deux poutres étant fixes entre elles. Dans un autre mode de réalisation non représenté mais inclus dans l'invention, le bras 8 est formé d'une seule poutre s'étendant selon un axe unique, étant réalisé d'une seule pièce.

La partie centrale 2 comporte entre autres une poutre principale 21, sensiblement horizontale que le châssis soit dans la position de travail ou dans la position de transport.

Comme visible sur la figure 2, dans le châssis 1 en configuration flottante, les parties latérales 3 ne sont pas alignées avec la partie centrale 2, étant pour l'une décalée vers le haut et pour l'autre décalée vers le bas, en fonction des accidents de terrain. Il est à noter toutefois que chaque partie latérale 3 reste parallèle sensiblement à la partie centrale 2.

Quand il est question d'alignement, on regarde non pas l'alignement de l'ensemble de la partie latérale 3 ou de la partie centrale 2 entre elles mais l'alignement des poutres de chacune d'elles, respectivement la poutre 7 de la partie latérale 3 et la poutre 21 de la partie centrale 2, sans prendre en compte le bras 8 de la partie latérale 3 notamment.

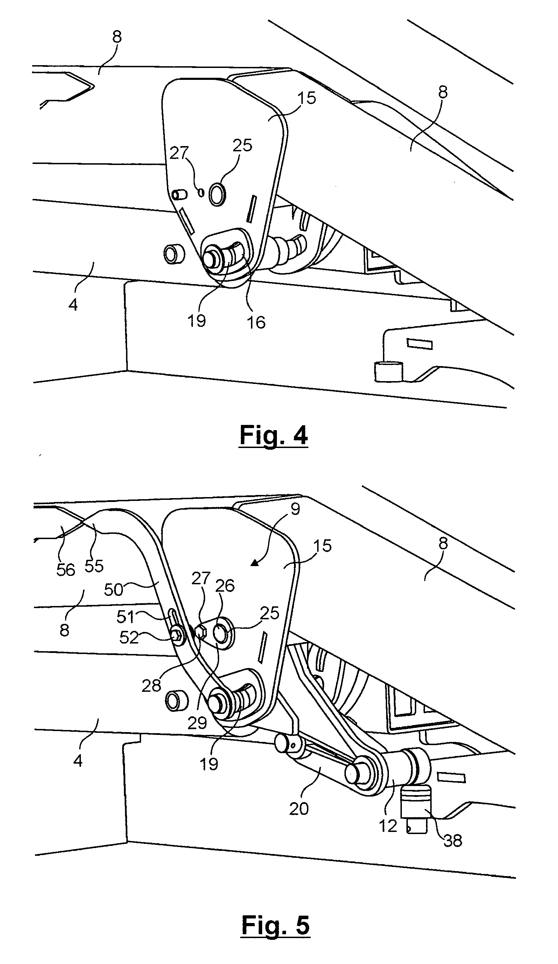

Comme visible sur les figures 5, 6 et 7, la partie latérale 3 comprend, dans la configuration rigide, un premier élément 10 destiné à coopérer avec une came 11 présente sur le châssis, pour contraindre la partie latérale 3 à occuper la position de travail. La partie latérale 3 comprend également un deuxième élément 12 formant organe de blocage au moins partiel de la partie latérale 3 dans la position de travail.

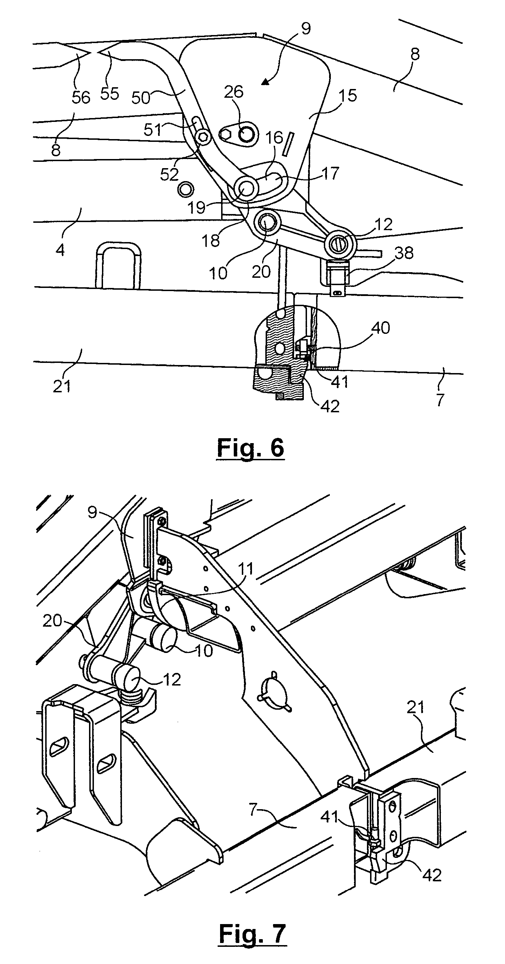

Conformément à l'invention, la partie latérale 3 comprend au moins un flasque 15 monté sur le bras 8 présentant, comme visible sur les figures 5 et 6 notamment, une lumière 16, dans cet exemple oblongue et curviligne. Le flasque 15 est monté, dans cet exemple, au niveau de l'articulation 9.

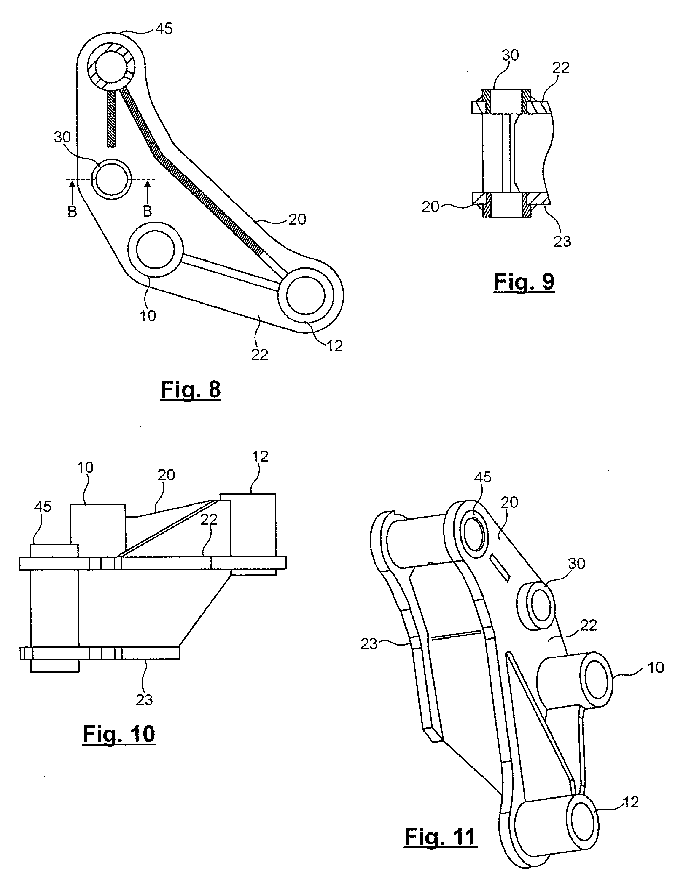

Le vérin 4 est solidaire par sa deuxième extrémité 6 d'un premier axe 19 monté coulissant dans la lumière 16. Les premier et deuxième éléments 10 et 12 sont portés par une pièce de verrouillage 20 visible sur les figures 5, 6 et 7 et de manière isolée sur les figures 8 à 11. Cette pièce de verrouillage 20 est montée de manière amovible sur le flasque 15 et est d'ailleurs retirée aisément pour mettre le châssis dans la configuration flottante.

Les flasques 15 sont au nombre de deux dans l'exemple illustré car ils enserrent le bras 8 au niveau de l'articulation 9 dont ils font partie. Chaque flasque 15 présente des moyens de positionnement de la pièce de verrouillage 20. Ces moyens de positionnement comprennent, dans cet exemple, un premier orifice 25, visible notamment sur la figure 4, de réception d'un deuxième axe 26 autour duquel la pièce de verrouillage 20 peut pivoter. Les moyens de positionnement du flasque 15 comprennent dans cet exemple un deuxième orifice 27 de réception de moyens de fixation 28 d'une plaque de retenue 29 du deuxième axe 26.

La pièce de verrouillage 20, comme visible sur les figures 8 à 11, se présente sous forme d'une pièce en forme sensiblement de banane présentant une première face 22 et une deuxième face 23 regroupant quatre fonctionnalités, à savoir celle de la liaison aux flasques 15, celle de la solidarisation au vérin 4, celle de la mise en alignement des poutres 7 et 21 des parties latérale 3 et centrale 2 respectivement, et celle du blocage au moins partiel de ces poutres 7 et 21 en alignement entre elles, comme on va le voir maintenant, plus en détail.

En effet, la pièce de verrouillage 20 comporte une ouverture 30, visible en coupe sur la figure 9, traversante, configurée pour permettre le passage du premier axe 19 auquel est reliée la deuxième extrémité 6 du vérin 4. Ainsi, la pièce de verrouillage 20 est solidaire en déplacement de la deuxième extrémité 6 du vérin 4.

La pièce de verrouillage 20 comporte, comme indiqué plus haut, le premier élément 10. Dans l'exemple illustré, le premier élément 10 comporte un galet. Ainsi, le premier élément 10 roule le long de la came 11 de manière à forcer l'alignement des poutres 7 et 21 des parties latérale et centrale respectivement. Le premier élément 10 est formé en saillie de la première face 22 de la pièce de verrouillage 20.

La pièce de verrouillage 20 comporte en outre, comme indiqué plus haut, le deuxième élément 12 qui se présente, comme le premier élément 10, sous forme d'un galet, dans cet exemple, lequel vient se positionner sur un plot 38 , réglable en hauteur dans l'exemple illustré, solidaire de la poutre 7 de la partie latérale 3. La coopération du deuxième élément 12 et du plot 38 assure le verrouillage au moins vers le haut de la partie latérale 3 en position de travail dans la configuration rigide. Comme le premier élément 10, le deuxième élément 12 est formé en saillie à partir de la première face 22 de la pièce de verrouillage 20.

Comme notamment visible sur les figures 8, 10 et 11, la pièce de verrouillage 20 comporte une autre ouverture 45 traversante permettant le passage du deuxième axe 26 pour la solidarisation de la pièce de verrouillage 20 aux flasques 15, dans une liaison pivotante.

Dans cet exemple, le châssis 1 comporte une butée 40 réglable et amovible agencée pour assurer l'alignement de la partie centrale 2 et de la partie latérale 3 dans la position de travail. Cette butée 40 comporte une vis de réglage 41 venant en butée d'un épaulement 42 formé sur la poutre 21 de la partie centrale 2 ou rapporté sur celle-ci, comme visible sur les figures 6 et 7. Cette butée 40 assure la fonction de bloquer vers le bas le déplacement de la poutre 7 relativement à la poutre 21 pour maintenir alignées les poutres 7 et 21, en configuration rigide et en position de travail.

Le châssis 1 comporte par ailleurs, dans l'exemple illustré, dans la configuration rigide, un indicateur 50 d'alignement entre la partie centrale 2 et la partie latérale 3. Cet indicateur 50 d'alignement, dans l'exemple illustré, est solidaire du premier axe 19, comme visible sur la figure 5, et apte à pivoter relativement à celui-ci. L'indicateur 50 d'alignement comprend de plus une lumière oblongue 51 dans laquelle peut coulisser un troisième axe 52 sous forme d'un moyen de fixation dans l'exemple illustré se fixant au flasque 15, de manière à solidariser l'indicateur 50 d'alignement au flasque 15 tout en laissant une certaine latitude de mouvement. L'indicateur d'alignement 50 présente en partie supérieure une extrémité 55 en forme de pointe venant, lorsque le vérin 4 est en bout de course et que l'alignement est obtenu, se positionner en face d'une pointe correspondante 56 d'un élément solidaire du bras 8.

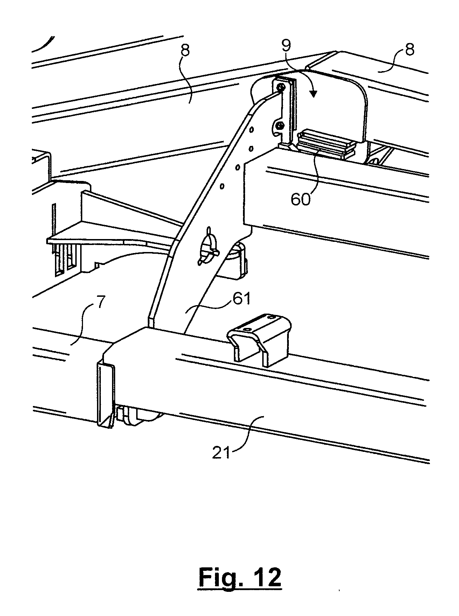

En l'absence de la pièce de verrouillage 20, le châssis 1 prend une configuration flottante comme illustré sur les figures 2, 3, 4 et 12. Dans cette configuration, la partie latérale 3 a, dans la position de travail, une possibilité de débattement relativement à la partie centrale 2. Cependant, ce débattement a une limite sous la forme d'une butée de débattement 60 visible sur la figure 12 limitant le mouvement de la poutre 7 relativement à la poutre 21 par l'intermédiaire d'un bras 61, comme visible, la butée de débattement 60 et le bras 61 étant prévus sur le châssis solidaire de la partie centrale 2 fixe.

Le fonctionnement du passage d'une position de transport, illustrée sur la figure 3, à une position de travail, illustrée sur la figure 1 ou 2 est le suivant.

Le vérin 4 est entraîné en mouvement afin de se rétracter et d'entraîner en mouvement le bras 8 pour abaisser la poutre 7 destinée à venir dans l'alignement de la poutre 21. Dans la configuration rigide, en fin de course, le premier axe 19 se trouve à une extrémité 17 de la lumière 16. Etant encore rétracté, le premier axe 19 va progressivement se diriger vers l'autre extrémité 18 de la lumière 16, entraînant tout d'abord le premier élément 10 le long de la came 11 de manière à aligner les poutres 21 et 7 entre elles puis entraînant le deuxième élément 12 sur le plot 38 de manière à finaliser, avec la butée de réglage 40, le verrouillage de la poutre 7 en alignement avec la poutre 21.

Par ailleurs, le déplacement du premier axe 19 dans la lumière 16 depuis l'extrémité 17 vers l'extrémité 18 entraîne l'indicateur 50 d'alignement en positionnement en face de la pointe 56 par sa propre pointe 55, lorsque l'alignement est terminé, validant ainsi un alignement correct des poutres 7 et 21.

Dans la configuration flottante, la pièce de verrouillage 20, de même que l'indicateur 50 d'alignement et la butée de réglage 40 ont été supprimés de façon relativement aisée, comme on peut le noter. Dans ce cas, lors de la rétractation du vérin 4, la partie latérale 3 est entraînée en mouvement depuis la position de transport vers la position de travail par un pivotement du bras 8 relativement à la partie centrale 2. La butée de débattement 60 limite le débattement de la partie latérale 3 relativement à la partie centrale 2, tout en le permettant dans une certaine mesure.

Dans cette configuration flottante, on peut, dans un mode de réalisation non illustré, ajouter des cales sur le premier axe 19, autour de la deuxième extrémité 6 du vérin 4, de manière à protéger le premier axe 19.

Dans toute la description, les expressions « comportant un » ou « comprenant un » doivent être comprises comme étant synonymes respectivement des expressions « comportant au moins un » et « comprenant au moins un », sauf si le contraire est spécifié.

## Revendications

1. Châssis (1) de semoir, comprenant :
- une partie centrale (2) fixe,
- au moins une partie latérale (3) montée articulée sur ladite partie centrale (2) entre une position de travail, alignée avec la partie centrale (2) et une position de transport, escamotée, dans laquelle la partie latérale (3) est placée au moins en partie au-dessus de la partie centrale (2), la partie latérale (3) comprenant une poutre (7) portée par un bras (8),
- au moins un vérin (4) dont une première extrémité (5) est solidaire de la partie centrale (2) et une deuxième extrémité (6) est solidaire de la partie latérale (3) au niveau du bras (8),
la partie latérale (3) comprenant :
- un premier élément (10) destiné à coopérer avec une came (11) pour contraindre ladite partie latérale (3) à occuper ladite position de travail et
- un deuxième élément (12) formant organe de blocage au moins partiel de ladite partie latérale (3) dans ladite position de travail,
châssis **caractérisé en ce que** :
- la partie latérale (3) comprend au moins un flasque (15) monté sur le bras (8) et présentant une lumière (16), notamment oblongue curviligne, ledit vérin (4) étant solidaire par sa deuxième extrémité (6) d'un premier axe (19) monté coulissant dans ladite lumière (16) et **en ce que**
- les premier et deuxième éléments (10 ;12) sont portés par une pièce de verrouillage (20) montée de façon amovible sur ledit flasque (15).

2. Châssis selon la revendication 1, **caractérisé en ce que** le flasque (15) présente des moyens de positionnement de ladite pièce de verrouillage (20).

3. Châssis selon la revendication 2, **caractérisé en ce que** les moyens de positionnement comprennent un premier orifice (25) de réception d'un deuxième axe (26) autour duquel la pièce de verrouillage (20) peut pivoter.

4. Châssis selon l'une quelconque des revendications 2 ou 3, **caractérisé en ce que** la pièce de verrouillage (20) comporte une ouverture (30) configurée pour permettre le passage dudit premier axe (19).

5. Châssis selon l'une quelconque des revendications précédentes, **caractérisé en ce que** le premier élément (10) comporte un galet.

6. Châssis selon l'une quelconque des revendications précédentes, **caractérisé en ce que** le deuxième élément (12) comporte un galet.

7. Châssis selon l'une quelconque des revendications précédentes, **caractérisé en ce qu'**il comporte un indicateur (50) d'alignement entre la partie centrale (2) et la partie latérale (3).

8. Châssis selon la revendication précédente, **caractérisé en ce que** l'indicateur (50) d'alignement est solidaire dudit premier axe (19).

9. Châssis selon l'une quelconque des revendications précédentes, **caractérisé en ce qu'**il comporte une butée (40) réglable et amovible agencée pour assurer l'alignement de la partie centrale (2) et de la partie latérale (3) dans la position de travail.

10. Châssis selon l'une quelconque des revendications précédentes en tant que dépendantes de la revendication 2, **caractérisé en ce que**, en l'absence de ladite pièce de verrouillage (20) sur ledit flasque (15), le châssis (1) prend une configuration flottante, la partie latérale (3) ayant alors dans la position de travail une possibilité de débattement relativement à la partie centrale (2), le châssis (1) comprenant une butée de débattement (60), limitant la course de débattement de la partie latérale (3) relativement à la partie centrale (2) en position de travail.

## Patentansprüche

1. Gestell (1) einer Sämaschine, umfassend
- einen festen zentralen Teil (2),
- mindestens einen seitlichen Teil (3), der gelenkig auf dem zentralen Teil (2) zwischen einer Arbeitsposition, die mit dem zentralen Teil (2) ausgerichtet ist, und einer eingezogenen Transportposition montiert ist, in welcher der seitliche Teil (3) zumindest teilweise über dem zentralen Teil (2) angeordnet ist, wobei der seitliche Teil (3) einen Träger (7) umfasst, der von einem Arm (8) getragen wird,
- mindestens einen Zylinder (4), dessen erstes Ende (5) mit dem zentralen Teil (2) verbunden ist, und dessen zweites Ende (6) mit dem seitlichen Teil (3) auf Höhe des Arms (8) verbunden ist,
wobei der seitliche Teil (3) umfasst:
- ein erstes Element (10), das dazu bestimmt ist, mit einer Nocke (11) zusammenzuwirken, um den seitlichen Teil (3) dazu zu bewegen, die Arbeitsposition einzunehmen, und
- ein zweites Element (12), das ein Element zur zumindest teilweisen Feststellung des seitlichen Teils (3) in der Arbeitsposition bildet,
wobei das Gestell **dadurch gekennzeichnet ist, dass**
- der seitliche Teil (3) mindestens einen Flansch (15) umfasst, der auf dem Arm (8) montiert ist und eine insbesondere längliche gebogene Öffnung (16) aufweist, wobei der Zylinder (4) mit seinem zweiten Ende (6) mit einer ersten Achse (19) verbunden ist, die in der Öffnung (16) gleitend montiert ist, und dass
- das erste und das zweite Elemente (10, 12) von einem Verriegelungsteil (20) getragen werden, der abnehmbar auf dem Flansch (15) montiert ist.

2. Gestell nach Anspruch 1, **dadurch gekennzeichnet, dass** der Flansch (15) Mittel zur Positionierung des Verriegelungsteils (20) aufweist.

3. Gestell nach Anspruch 2, **dadurch gekennzeichnet, dass** die Positionierungsmittel eine erste Öffnung (25) für die Aufnahme einer zweiten Achse (26) umfassen, um die der Verriegelungsteil (20) schwenken kann.

4. Gestell nach einem der Ansprüche 2 oder 3, **dadurch gekennzeichnet, dass** der Verriegelungsteil (20) eine Öffnung (30) umfasst, die derart ausgeführt ist, dass sie den Durchgang der ersten Achse (19) ermöglicht.

5. Gestell nach einem der vorhergehenden Ansprüche, **dadurch gekennzeichnet, dass** das erste Element (10) eine Rolle umfasst.

6. Gestell nach einem der vorhergehenden Ansprüche, **dadurch gekennzeichnet, dass** das zweite Element (12) eine Rolle umfasst.

7. Gestell nach einem der vorhergehenden Ansprüche, **dadurch gekennzeichnet, dass** es einen Ausrichtungsindikator (50) zwischen dem zentralen Teil (2) und dem seitlichen Teil (3) umfasst.

8. Gestell nach dem vorhergehenden Anspruch, **dadurch gekennzeichnet, dass** der Ausrichtungsindikator (50) mit der ersten Achse (19) verbunden ist.

9. Gestell nach einem der vorhergehenden Ansprüche, **dadurch gekennzeichnet, dass** es einen einstellbaren und abnehmbaren Anschlag (40) umfasst, der derart vorgesehen ist, dass er die Ausrichtung des zentralen Teils (2) und des seitlichen Teils (3) in Arbeitsposition gewährleistet.

10. Gestell nach einem der vorhergehenden Ansprüche, die von Anspruch 2 abhängig sind, **dadurch gekennzeichnet, dass** bei Nichtvorhandensein des Verriegelungsteils (20) auf dem Flansch (15) das Gestell (1) eine schwebende Ausführung annimmt, wobei der seitliche Teil (3) nun in der Arbeitsposition eine Möglichkeit der Auslenkung zum zentralen Teil (2) hat, wobei das Gestell (1) einen Auslenkungsanschlag (60) umfasst, der den Auslenkungsweg des seitlichen Teils (3) relativ zum zentralen Teil (2) in Arbeitsposition begrenzt.

## Claims

1. Seeder frame (1), comprising:
- a fixed central part (2),
- at least one lateral part (3) mounted articulatedly on said central part (2) between a working position, aligned with the central part (2), and a retracted transport position, in which the lateral part (3) is at least partially placed above the central part (2), the lateral part (3) comprising a beam (7) carried by an arm (8),
- at least one jack (4), a first end (5) of which is secured to the central part (2) and a second end (6) of which is secured to the lateral part (3) at the arm (8),
the lateral part (3) comprising:
- a first element (10) intended to cooperate with a cam (11) to force said lateral part (3) to occupy said working position and
- a second element (12) forming a member for at least partially blocking said lateral part (3) in said working position,
which frame is **characterised in that**:
- the lateral part (3) comprises at least a side plate (15) mounted on the arm (8) and having a, in particular curved elongated, hole (16), said jack (4) being secured by its second end (6) to a first shaft (19) mounted slidably in said hole (16) and **in that**
- the first and second elements (10 ; 12) are carried by a locking part (20) mounted removably on said side plate (15).

2. Frame according to Claim 1, **characterised in that** the side plate (15) has positioning means for positioning said locking part (20).

3. Frame according to Claim 2, **characterised in that** the positioning means comprise a first orifice (25) for receiving a second shaft (26) about which the locking part (20) can pivot.

4. Frame according to either one of Claims 2 or 3, **characterised in that** the locking part (20) has an opening (30) configured to permit the passage of said first shaft (19).

5. Frame according to any one of the preceding claims, **characterised in that** the first element (10) has a roller.

6. Frame according to any one of the preceding claims, **characterised in that** the second element (12) has a roller.

7. Frame according to any one of the preceding claims, **characterised in that** it has an alignment indicator (50) for indicating alignment between the central part (2) and the lateral part (3).

8. Frame according to the preceding claim, **characterised in that** the alignment indicator (50) is secured to said first shaft (19).

9. Frame according to any one of the preceding claims, **characterised in that** it has an adjustable removable stop arranged to ensure the alignment of the central part (2) and the lateral part (3) in the working position.

10. Frame according to any one of the preceding claims as dependent on Claim 2, **characterised in that**, in the absence of said locking part (20) on said side plate (15), the frame (1) assumes a floating configuration, the lateral part (3) then having in the working position a possibility of displacement relative to the central part (2), the frame (1) comprising a displacement stop (60) limiting the displacement travel of the lateral part (3) relative to the central part (2) in the working position.
